Europäisches Patentamt

European Patent Office

Office européen des brevets

(19)

(11) Veröffentlichungsnummer: **0 459 274 A2**

## (12) EUROPÄISCHE PATENTANMELDUNG

(21) Anmeldenummer: 91108190.9

(22) Anmeldetag: 21.05.91

(51) Int. Cl.5: **F16H 61/12**, B60K 41/06, G01P 3/48

(30) Priorität: 23.05.90 HU 314690

(43) Veröffentlichungstag der Anmeldung:
**04.12.91 Patentblatt 91/49**

(84) Benannte Vertragsstaaten:
**AT DE FR GB**

(71) Anmelder: **Csepel Autogyár**
**Pf. 38**
**H-2311 Szigetszentmiklos(HU)**

(72) Erfinder: **Simonyi, Sándor, Dr. Dipl.-Ing.**

Petofi u. 59
**H-3102 Salgotarján, Baglyasalja(HU)**
Erfinder: **Szabo, Ferenc**
**Kállai Eva u. 3**
**H-3100 Salgotarján(HU)**
Erfinder: **Váloczi, György, Dipl.-Ing.**
**Budapesti ut 40**
**H-3104 Salgotarján(HU)**

(74) Vertreter: **Patentanwälte Viering & Jentschura**
**Steinsdorfstrasse 6 Postfach 22 14 43**
**W-8000 München 22(DE)**

(54) Verfahren zum Überwachen der Drehzahlsignalgeber des Antriebsstrangs eines Kraftfahrzeuges.

(57) Verfahren zum Überwachen der Drehzahlsignalgeber des Antriebsstrangs eines Kraftfahrzeugs, wobei die Werte der Ausgangssignale wenigstens dreier Drehzahlsignalgeber (2, 7, 8) des ein automatisches Wechselgetriebe (5) enthaltenden Antriebsstrangs nach Umrechnen der zwischen denselben jeweils vorhandenen Übersetzungsverhältnisse auf Synchronwerte miteinander verglichen werden und Abweichungen der Synchronwerte voneinander erfaßt und ausgewertet werden.

Fig. 1

EP 0 459 274 A2

Die Erfindung betrifft ein Verfahren zum Überwachen der Drehzahlsignalgeber des Antriebsstranges eines Kraftfahrzeugs, von denen die Drehzahl von Wellen des von der Kurbelwelle des Motors über das Getriebe bis zu den Radantriebswellen reichenden Antriebsstrangs gemessen wird.

Insbesondere, wenngleich nicht ausschließlich, ist das Verfahren gemäß der Erfindung für Kraftfahrzeuge mit einem automatischen Wechselgetriebe im Antriebsstrang vorgesehen.

Durch die Erfindung wird das Problem gelöst, fehlerhafte Drehzahlsignalgeber des Antriebsstrangs während des Betriebs des Kraftfahrzeuges aufzudecken.

Gemäß der Erfindung werden die Werte der Ausgangssignale wenigstens dreier Drehzahlsignalgeber des Antriebsstrangs nach rechnergesteuertem Umrechnen der zwischen denselben vorhandenen Übersetzungsverhältnisse auf Synchronwerte miteinander verglichen und Abweichungen der Synchronwerte voneinander erfaßt und ausgewertet. Durch die Auswertung kann festgestellt werden, ob der Betrieb der Drehzahlmeßgeber fehlerfrei oder fehlerhaft ist, wobei im letzteren Fall geeignet in die Steuerung des Antriebsstranges eingegriffen werden kann.

Das Verfahren kann in allen solchen Fällen verwendet werden, in denen die Drehzahl in dem Antriebsstrang an wenigstens drei Stellen gemessen und mit Hilfe eines Mikrocomputers ausgewertet wird. Das Verfahren beruht darauf, daß in dem geschlossenen Antriebsstrang die aus den Werten der Ausgangssignale der Drehzahl-Signalgeber in Abhängigkeit von den jeweiligen Übersetzungsverhältnissen berechneten Synchronwerte im fehlerlosen Fall einander gleichen müssen.

Falls einer der Signalgeber fehlerhaft ist, kann der fehlerhafte Geber durch das Synchronrechnen der drei Geber eindeutig bestimmt werden. Falls zwei Geber fehlerhaft sind, kann nur das Vorhandensein des Fehlers detektiert werden. Durch Betriebsgrenzwert-Analysieren der Eingangssignale des jeweiligen Signalgebers können noch weitere genauere Informationen über die Art des Fehlers erhalten werden.

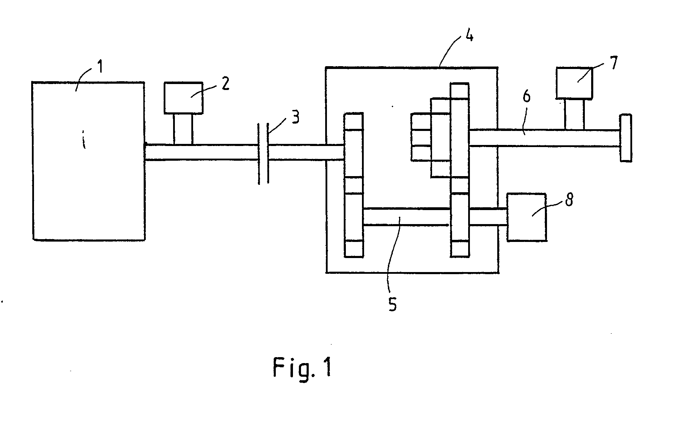

Das Verfahren wurde von uns bei einem von dem Mikrocomputer gesteuerten, völlig automatisierten mechanischen Getriebe angewendet, wobei gemäß der Zeichnung die drei Geber ein Motordrehzahlgeber 2, ein Vorgelegewellendrehzahlgeber 8 und ein Kardanwellendrehzahlgeber 7 waren. In der Zeichnung bezeichnen weiter die Bezugszahlen 1 den Motor, 3 die Kupplung, 4 das automatische Wechselgetriebe, 5 dessen Vorgelegewelle, und 6 die Kardanwelle.

Die Art der Drehzahlsignalgeber kann hinsichtlich des Aufbaus weitgehend beliebig sein (optoelektronisch, induktiv, mit Hall-Generator). Wir haben optoelektronische Drehzahlsignalgeber, die pro Umdrehung der betreffenden Welle 20 Impulse abgeben, in einem die Periodenzeit messenden System verwendet.

In der Leerlauf-Gangstufe kann im Falle einer voll eingerückten Kupplung 3 der Synchronfehler des Motordrehzahlgebers 2 und des Vorgelegewellendrehzahlgebers 8 detektiert werden, wobei dieser Fehler eine Information über einen eventuell vorhandenen andauernden Schlupf der Kupplung 3 geben kann.

In jeder eingeschalteten Geschwindigkeitsstufe kann eine Fehlerinformation aus den mit den der Stufe entsprechenden Übertragungsverhältnissen ausgerechneten Synchronwerten entsprechend der oben beschriebenen Weise gewonnen werden. Der Mikrocomputer zeigt die Kodezahl des fehlerhaften Gebers an und in Kenntnisnahme des Vorhandenseins des Fehlers steuert er das Getriebe derart, daß er, eine geringere Antriebsleistung herbeiführend, den Algorithmus für die fehlerlose Steuerung auf einen solchen zur Berücksichtigung des Fehlers korrigiert. Insbesondere kann bei dem automatischen Gangwechsel die fehlerhafte Geschwindigkeitsstufe aufgrund der Korrektur übersprungen werden oder es können die an sich drehzahlabhängig gewählten Synchronisationszeiten auf konstante, sichere Werte geändert werden, so daß das Fahrzeug, wenngleich mit geringerer Leistung, nach wie vor in Betrieb bleibt und seinen Weg nach wie vor weiter fortsetzt. Ferner ist es bei fehlerhaften Drehzahlsignalgebern beispielsweise möglich, das Schalten des Getriebes nur noch in Abhängigkeit von der Fahrgeschwindigkeit des Kraftfahrzeugs und der Gaspedalstellung durchzuführen, die Drehzahlabhängigkeit für das Schalten jedoch unberücksichtigt zu lassen. Auch kann bei fehlerhaftem Motordrehzahlsignalgeber das Signal des Drehzahlsignalgebers der Vorgelegewelle bei eingerückter Kupplung unter Berücksichtigung des Übersetzunsverhältnisses als Ersatz für das Motordrehzahlsignal verwendet werden.

**Patentansprüche**

1. Verfahren zum Überwachen der Drehzahlsignalgeber (2, 7, 8) des Antriebsstrangs eines Kraftfahrzeugs, dadurch gekennzeichnet, daß die Werte der Ausgangssignale wenigstens dreier Drehzahlsignalgeber (2, 7, 8) des Antriebsstrangs nach Umrechnen der zwischen denselben jeweils vorhandenen Übersetzungsverhältnisse auf Synchronwerte miteinander verglichen werden und Abweichungen der Synchronwerte voneinander erfaßt und ausgewertet werden.

Fig. 1